# EUROPÄISCHE PATENTANMELDUNG

(11) **EP 0 803 188 A2**
(43) Veröffentlichungstag der Anmeldung: **29.10.1997**
(21) Anmeldenummer: 97106516.4
(22) Anmeldetag: 19.04.1997
(51) Int. Cl.: A01G 9/02, A01G 31/06

(54) **Aufzuchtbehälter für Pflanzen oder Gemüse**

(30) Priorität: 23.04.1996 DE 19616146
(71) Anmelder: K. Beiner Kunststoffverarbeitung und Werkzeugbau, 32657 Lemgo (DE)
(72) Erfinder: Beiner, Günter, 32657 Lemgo (DE)
(74) Vertreter: COHAUSZ HASE DAWIDOWICZ & PARTNER

(57) **Zusammenfassung**

Die Erfindung betrifft einen stapelbaren Behälter zur Aufzucht von Pflanzen oder Gemüse, insbesondere von Chicoree, mit einer Bodenfläche, an deren Rändern nach oben weisende, an den Ecken miteinander verbundene Seitenwände derart angeordnet sind, daß sie ein Becken bilden, in dem das Transportgut bewässerbar ist, wobei in dem Behälter ein zumindest annähernd vertikal verlaufender, oberhalb der Bodenfläche abgeschlossener oder endender Hauptkanal zum Zuführen von Bewässerungsflüssigkeit vorgesehen ist, von dem aus ein oder mehrere Bewässerungskanäle sich erstrecken, durch die die Bewässerungsflüssigkeit in dem Becken verteilbar ist und in dem Becken ein oder mehrere Entwässerungskanäle vorgesehen sind, durch die die Bewässerungsflüssigkeit aus dem Becken in den Hauptkanal eines unterhalb des Behälters angeordneten zweiten Behälters zuführbar ist.

## Beschreibung

Die Erfindung betrifft einen stapelbaren Behälter zur Aufzucht von Pflanzen oder Gemüse, insbesondere von Chicoree, mit einer Bodenfläche, an deren Rändern nach oben weisende, an den Ecken miteinander verbundene Seitenwände derart angeordnet sind, daß sie ein Becken bilden, in dem das Transportgut bewässerbar ist.

In solchen Behältern können Chicoreepuppen (Chicoreewurzeln) gelagert und mit Wasser oder mit einer Nährlauge bewässert werden. Oft sind die Bodenflächen zu einer Ecke hin abfallend angeordnet, in der sich ein verschließbares Ablaufloch befindet, durch das der Behälter entwässert werden kann. Bei der Aufzucht der Chicoreepuppen muß die Nährlauge in regelmäßigen Abständen gewechselt werden, was jedes Mal einen erheblichen Aufwand bedeutet. Optimales Wachstum der Chicoreepuppen wird bei einem kontinuierlichen Austausch der Nährlauge erreicht, wobei die Chicoreewurzeln in einer konstanten Füllhöhe der Nährlauge gelagert sind.

Der Aufwand zum Ablassen der Nährlauge und zum anschließenden Wiederbefüllen des Behälters wird insbesondere dann sehr groß, wenn mehrere Behälter übereinander gestapelt sind.

Aufgabe der Erfindung ist es, einen konstruktiv einfachen und preiswert herzustellenden Behälter der eingangs genannten Art zu schaffen, der auf einfache Weise eine gleichmäßige und kontinuierliche Be- und Entwässerung der aufzuziehenden Pflanzen oder Gemüse auch dann ermöglicht, wenn mehrere Behälter aufeinander gestapelt sind. Außerdem soll der Behälter bei geringen Gewicht eine große Stabilität und eine hohe Lebensdauer haben.

Diese Aufgabe wird erfindungsgmäß dadurch gelöst, daß in dem Behälter ein zumindest annähernd vertikal verlaufender oberhalb der Bodenfläche abgeschlossener oder endender Hauptkanal zum Zuführen von Bewässerungsflüssigkeit vorgesehen ist, von dem aus ein oder mehrere Bewässerungskanäle sich erstrecken, durch die die Bewässerungsflüssigkeit in dem Becken verteilbar ist und daß in dem Becken ein oder mehrere Entwässerungskanäle vorgesehen sind, durch die die Bewässerungsflüssigkeit aus dem Becken in den Hauptkanal eines unterhalb des Behälters angeordneten zweiten Behälters zuführbar ist.

Die Bewässerungsflüssigkeit kann also auf einfache Weise an einer Stelle zentral in den Hauptkanal zugeführt werden, von wo aus sie sich über die Bewässerungskanäle gleichmäßig in dem Behälter verteilt. Ebenso wird eine gleichmäßige Entwässerung des Zuchtgutes erreicht.

Solche Behälter können problemlos gestapelt werden, wobei üblicherweise bis zu 12 Behälter übereinander gestellt werden.

In den unteren Behältern verteilt sich die Bewässerungsflüssigkeit wie zuvor für den ersten Behälter beschrieben.

Besonders vorteilhaft ist es, wenn der Hauptkanal an beiden Enden offen ist und vertikal bis zu einer Öffnung in der Bodenfläche verläuft und oberhalb der Bodenfläche durch einen Zwischenboden verschlossen ist, wobei die Bewässerungskanäle oberhalb des Zwischenbodens an den Hauptkanal angeschlossen sind und die Entwässerungskanäle unterhalb des Zwischenbodens in den Hauptkanal führen. Dadurch, daß der Hauptkanal vertikal verläuft, liegen die Hauptkanäle mehrerer übereinander gestapelter Behälter koaxial fluchtend übereinander.

Ein besonders gutes Fließverhalten der Bewässerungsflüssigkeit kann dadurch erreicht werden, daß die Bewässerungskanäle ein geringes Gefälle vom Hauptkanal zu ihren Enden hin aufweisen und die Entwässerungskanäle umgekehrt ein geringes Gefälle von ihrem Ende bis zum Hauptkanal hin aufweisen.

Die Bewässerungskanäle können vorteilhafterweise rundherum geschlossen ausgebildet sein und an ihrer Unterseite vorzugsweise seitlich angeordnete Austrittsöffnungen aufweisen, durch die die Bewässerungsflüssigkeit dem Becken zuführbar ist. Es ist aber auch möglich, in einer alternativen Ausführungsform die Bewässerungskanäle oben offen auszubilden.

Bei den Entwässerungskanälen ist es besonders vorteilhaft, sie rinnenförmig oben offen mit jeweils einer oder zwei Überlaufkanten auszubilden. Dadurch kann eine bestimmte Füllhöhe der Bewässerungsflüssigkeit im Behälter konstant gehalten werden. Alternativ hierzu ist es jedoch auch möglich, die Entwässerungskanäle rundherum geschlossen auszubilden und an ihrer Oberseite Eintrittsöffnungen vorzusehen. Dadurch können Verstopfungen der Entwässerungskanäle und somit auch der Bewässerungskanäle der unteren Behälter verhindert werden.

Günstig ist es, wenn sich die Be- und Entwässerungskanäle bis zu den Seitenwänden erstrecken. An den Enden der Kanäle können dann in den Seitenwänden Öffnungen vorgesehen sein, die durch Stopfen oder Deckel verschließbar sind. Durch Öffnen dieser Öffnungen kann eine vollständige Entleerung des Behälters erreicht werden. Dadurch kann jeder Behälter gründlich und keimfrei gereinigt werden, was üblicherweise spätestens nach 3 Aufzuchtjahren von jeweils 3-4 Wochen erfolgt.

Wenn der Hauptkanal in der Mitte der Bodenfläche angeordnet ist, kann er die Funktion einer zusätzlichen Stütze übernehmen, was insbesondere bei mehreren übereinander gestapelten Behältern zu einer Erhöhung der Tragfähigkeit und der Stabilität der Behälter führt.

Die Stabilität des Behälters kann ferner dadurch erhöht werden, daß Quer- und/oder Längsversteifungsrippen angeordnet werden, die vorteilhafterweise mit den Kanälen verbunden sein können. Insbesondere können die Querversteifungsrippen auch eine seitliche Begrenzung der rinnenförmigen Entwässerungskanäle bilden.

Wenn die in dem Behälter aufzuziehenden Pflanzen oder Gemüse über die Oberkante der Seitenwände herausragen, ist es vorteilhaft, wenn der Behälter in den Ecken senkrecht verlaufende Rohrabschnitte aufweist, in die Stützelemente einsetzbar sind. Auf diese Weise können mehrere Behälter auch dann übereinander gestapelt werden, wenn sich großes Zuchtgut in den Behältern befindet. Wenn die Behälter nicht benutzt werden, können sie nach Entfernen der Stützelemente raum- und platzsparend gestapelt werden.

Eine besonders hohe Lebensdauer und ein geringes Gewicht erhält der Behälter dann, wenn er aus Kunststoff, insbesondere aus einem Polyolefin besteht. Der Behälter kann dabei vorteilhafterweise im Druckgußverfahren hergestellt werden. Wenn der Behälter aus Kunststoff besteht kann er kein Wasser aufnehmen und daher weder faulen noch rosten, was bei bekannten Behältern aus Holz bzw. Stahl zu einer erheblichen Einschränkung der Lebensdauer des Behälters führt.

Ein weiterer Vorteil eines aus Kunststoff gefertigten Behälters besteht darin, daß der Behälter durch die beim Gießprozeß zwangsläufig entstehenden Radien in den Ecken und Kanten besonders leicht und gründlich zu reinigen ist.

Schließlich wird eine besonders große Stabilität eines aus Kunststoff bestehenden Behälters dadurch erreicht, daß der Behälter mit den Kanälen, Seitenwänden, Rohrabschnitten und Versteifungsrippen einstückig ausgebildet ist. Dadurch werden auch bei voller Beladung die Durchbiegungen auf ein Minimum reduziert, wobei ein Behälter, der sechshundert bis siebenhundert Chicoreewurzeln aufnehmen kann, eine Traglast von bis zu 250 kg aufweisen kann.

Weitere Vorteile und Merkmale der Erfindung ergeben sich aus den Unteransprüchen sowie aus der nachfolgenden Beschreibung und den in den Zeichnungen dargestellten Ausführungsbeispielen.

Es zeigen:
- Figur 1:: Erfindungsgemäßer Behälter

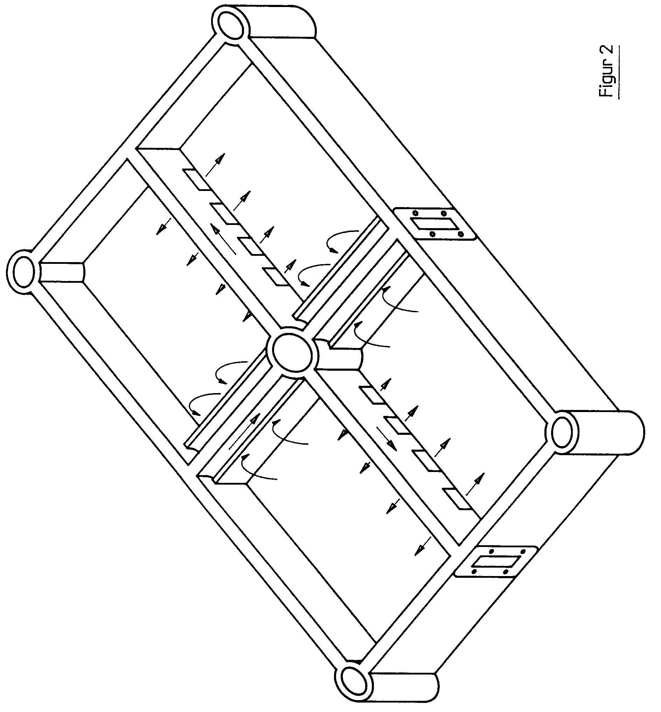

- Figur 2:: Strömungsrichtungen der Bewässerungsflüssigkeit

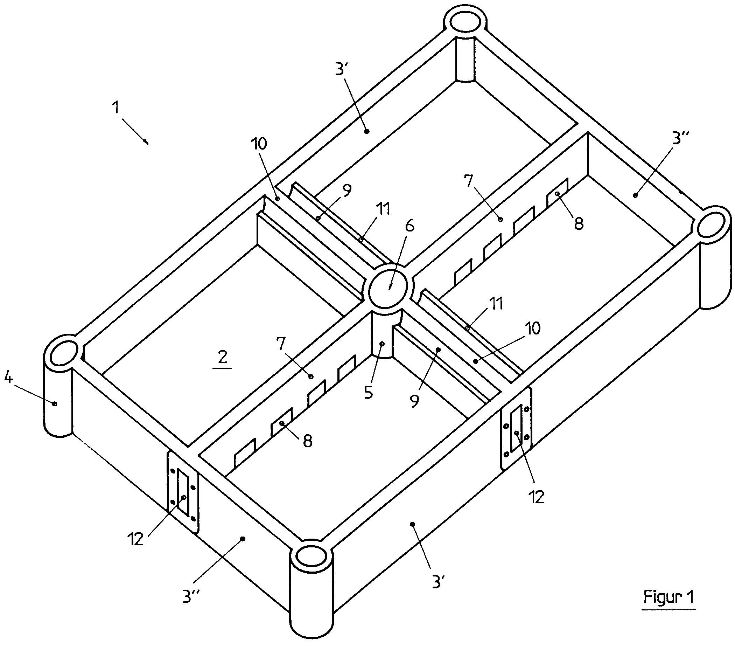

Der in der Figur 1 dargestellte Behälter 1 ist rechteckig ausgebildet und hat eine Bodenfläche 2 von insgesamt 1070 mm x 1270 mm. An den äußeren Rändern der Bodenfläche 2 befinden sich vier Seitenwände 3, die mit einer Höhe von 115 mm nach oben weisen. In den Ecken der Bodenfläche 2 Sind jeweils zwei Seitenwände 3 durch einen oben und unten offenen Rohrabschnitt 4 miteinander verbunden. In der Mitte der Bodenfläche 2 befindet sich ein senkrecht verlaufender Hauptkanal 5. Der Hauptkanal 5 besteht aus einem oben und unten offenen Rohrabschnitt, der in seiner Mitte durch einen parallel zur Bodenfläche 2 verlaufenden Zwischenboden 6 verschlossen ist. Alternativ kann der Zwischenboden 6 auch dachförmig oder kegelförmig ausgebildet sein, wobei die Spitze jeweils nach oben zeigt. Die Bodenfläche 2 hat in der Mitte eine Öffnung, in die das untere Ende des Hauptkanals 5 mündet.

Vom Hauptkanal 5 führen zwei gerade Bewässerungskanäle 7 parallel zu den Längsseitenwänden 3' bis zu den beiden Querseitenwänden 3''. Die Bewässerungskanäle 7 sind rundherum geschlossen und haben dieselbe Höhe wie die Seitenwände 3. An ihrer Unterseite weisen die Bewässerungskanäle 7 seitliche Austrittsöffnungen 8 auf, durch die die Bewässerungsflüssigkeit zu beiden Seiten in den Behälter 1 austreten kann. Die Bewässerungskanäle 7 sind mit dem Hauptkanal 5 oberhalb des Zwischenbodens 6 verbunden.

Von den Längsseitenwänden 3' führen gerade Entwässerungskanäle 9 parallel zu den Querseitenwänden 3'' zum Hauptkanal 5. Die Entwässerungskanäle 9 sind rinnenförmig oben offen ausgebildet und mit dem Hauptkanal 5 unterhalb des Zwischenbodens 6 verbunden. In dem gezeigten Ausführungsbeispiel sind insgesamt vier Entwässerungskanäle 9 vorgesehen, wobei jeweils zwei benachbarte Entwässerungskanäle 9 durch eine Querversteifungsrippe 10, die die gleiche Höhe wie die Seitenwände 3 hat, voneinander getrennt sind. Die äußeren Überlaufkanten 11 der Entwässerungskanäle 9 sind tiefer als die obere Kante der Seitenwände 3 oder der Querversteifungsrippe 10 angeordnet. Bis zur Höhe dieser Überlaufkanten 11 kann die Bewässerungsflüssigkeit, insbesondere die Nährlösung für die Chicoreewurzeln in den Behälter 1 gefüllt werden.

Die Seitenwände 3 sind an den Stellen, wo die Bewässerungskanäle 7 und die Entwässerungskanäle 9 enden, durch eine Öffnung 12 offen ausgebildet. Wenn der Behälter 1 benutzt wird, sind die Öffnungen 12 jeweils durch eine Stopfen verschlossen. Diese Stopfen können zur vollständigen Entleerung des Behälters 1 entfernt werden, wodurch die Bewässerungskanäle 7 und die Entwässerungskanäle 9 nach außen offen sind. Die Bewässerungsflüssigkeit fließt dann durch die Austrittsöffnungen 8 hindurch in die Bewässerungskanäle 7 und von hier durch die Öffnungen 12 aus dem Behälter heraus. Alternativ ist es auch möglich, statt der durch Stopfen verschließbare Öffnungen Ventile vorzusehen.

In die Rohrabschnitte 4 können Stützelemente eingesteckt werden, so daß mehrere Behälter 1 auch dann übereinander stapelbar sind, wenn Chicoreepuppenn aufgezogen werden sollen, die höher sind, als die Höhe der Seitenwände 3. Dabei kann zwischen die Hauptkanäle 5 zweier übereinander gestapelter Behälter 1 ein Verbindungsrohr eingesteckt werden, das die Bewässerungsflüssigkeit führt und die Bodenfläche 2 des oberen Behälters 1 in der Mitte zusätzlich abstützt.

Die Bewässerungsflüssigkeit, insbesondere die Nährlösung wird in den Hauptkanal des obersten Behälters 1 eingefüllt, von wo aus sie in die Bewässerungskanäle 7 und von da durch die Austrittsöffnungen 8 der Bewässerungskanäle 7 in den Behälter 1 austritt. Nachdem die Bewässerungsflüssigkeit die Füllhöhe der Überlaufkanten 11 erreicht hat, wird zusätzlich zugeführte Bewässerungsflüssigkeit über die Entwässerungskanäle 9 in den unteren Teil des Hauptkanals 5 zurückgeführt. Von hier aus gelangt sie in den Hauptkanal 5 des darunter befindlichen Behälters 1. Auf diese Weise verteilt sich die Bewässerungsflüssigkeit in allen übereinander gestapelten Behältern 1 und kann in jedem Behälter 1 auf einfache Weise kontinierlich ausgetauscht und auf konstanter Füllhöhe gehalten werden.

Nachdem die Nährlauge aus dem untersten Behälter 1 ausgetreten ist, wird sie mit Nährstoffen angereichert und erneut in den Hauptkanal 5 des obersten Behälters 1 gepumpt.

## Patentansprüche

1. Stapelbarer Behälter zur Aufzucht von Pflanzen oder Gemüse, insbesondere von Chicoree, mit einer Bodenfläche, an deren Rändern nach oben weisende, an den Ecken miteinander verbundene Seitenwände derart angeordnet sind, daß sie ein Becken bilden, in dem das Transportgut bewässerbar ist,
**dadurch gekennzeichnet,**
daß in dem Behälter (1) ein zumindest annähernd vertikal verlaufender, oberhalb der Bodenfläche (2) abgeschlossener oder endender Hauptkanal (5) zum Zuführen von Bewässerungsflüssigkeit vorgesehen ist, von dem aus ein oder mehrere Bewässerungskanäle (7) sich erstrecken, durch die die Bewässerungsflüssigkeit in dem Becken verteilbar ist und
daß in dem Becken ein oder mehrere Entwässerungskanäle (9) vorgesehen sind, durch die die Bewässerungsflüssigkeit aus dem Becken in den Hauptkanal (5) eines unterhalb des Behälters (1) angeordneten zweiten Behälters (1) zuführbar ist.

2. Behälter nach Anspruch 1, **dadurch gekennzeichnet,** daß mehrere Behälter (1) derart übereinander stapelbar sind, daß sie ein Be- und Entwässerungssystem bilden.

3. Behälter nach Anspruch 1 oder 2, **dadurch gekennzeichnet,** daß der Hauptkanal (5) an beiden Enden offen ist und vertikal bis zu einer Öffnung in der Bodenfläche (2) verläuft und oberhalb der Bodenfläche (2) durch einen Zwischenboden (6) verschlossen ist.

4. Behälter nach Anspruch 3, **dadurch gekennzeichnet,** daß die Bewässerungskanäle (7) oberhalb des Zwischenbodens (6) an den Hauptkanal (5) angeschlossen sind.

5. Behälter nach Anspruch 3 oder 4, **dadurch gekennzeichnet,** daß die Entwässerungskanäle (9) unterhalb des Zwischenbodens (6) in den Hauptkanal (5) führen.

6. Behälter nach einem der vorherigen Ansprüche, **dadurch gekennzeichnet,** daß die Bewässerungskanäle (7) ein geringes Gefälle vom Hauptkanal (5) zu ihren Enden hin aufweisen.

7. Behälter nach einem der vorherigen Ansprüche, **dadurch gekennzeichnet,** daß die Bewässerungskanäle (7) rundherum geschlossen sind und an ihrer Unterseite Austrittsöffnungen (8) aufweisen, durch die die Bewässerungsflüssigkeit dem Becken zuführbar ist.

8. Behälter nach Anspruch 7, **dadurch gekennzeichnet,** daß die Bewässerungskanäle (7) mit der Bodenfläche (2) verbunden sind und die Austrittsöffnungen (8) seitlich an den Bewässerungskanälen (7) angeordnet sind.

9. Behälter nach einem der vorherigen Ansprüche, **dadurch gekennzeichnet,** daß die Entwässerungskanäle (9) ein geringes Gefälle von ihrem Ende zum Hauptkanal (5) hin aufweisen.

10. Behälter nach einem der vorherigen Ansprüche, **dadurch gekennzeichnet,** daß die Entwässerungskanäle (9) rinnenförmig mit jeweils einer oder zwei Überlaufkanten (11) ausgebildet sind.

11. Behälter nach einem der Ansprüche 1 bis 9, **dadurch gekennzeichnet,** daß die Entwässerungskanäle (9) rundherum geschlossen sind und an ihrer Oberseite Eintrittsöffnungen aufweisen.

12. Behälter nach Anspruch 10 oder 11, **dadurch gekennzeichnet,** daß die Entwässerungskanäle (9) mit der Bodenfläche (2) verbunden sind.

13. Behälter nach einem der vorherigen Ansprüche, **dadurch gekennzeichnet,** daß die Be- und gegebenenfalls Entwässerungskanäle (7, 9) sich bis zu den Seitenwänden (3) erstrecken.

14. Behälter nach Anspruch 13, **dadurch gekennzeichnet,** daß die Seitenwände (3) an den Enden der Kanäle (7, 9) durch Stopfen oder Deckel verschließbare Öffnungen (12) aufweisen.

15. Behälter nach einem der vorherigen Ansprüche, **dadurch gekennzeichnet,** daß der Hauptkanal (5) in der Mitte der Bodenfläche (2) angeordnet ist.

16. Behälter nach Anspruch 15, **dadurch gekennzeichnet,** daß der Behälter (1) rechteckig ausgebildet ist und jeweils zwei geradlinig und senkrecht zu den Seitenwänden (3', 3'') verlaufende Be- und Entwässerungskanäle (7, 9) aufweist.

17. Behälter nach einem der vorherigen Ansprüche, **dadurch gekennzeichnet,** daß der Behälter (1) in den Ecken senkrecht verlaufende Rohrabschnitte (4) aufweist, in die Stützelemente einsetzbar sind.

18. Behälter nach einem der vorherigen Ansprüche, **dadurch gekennzeichnet,** daß in den Hauptkanal (5) zu beiden Seiten hin Verbindungsrohre einsteckbar sind.

19. Behälter nach einem der vorherigen Ansprüche, **dadurch gekennzeichnet,** daß der Behälter (1) aus Kunststoff, insbesondere aus einem Polyolefin besteht.

20. Behälter nach Anspruch 19, **dadurch gekennzeichnet,** daß Quer- und/oder Längsversteifungsrippen (10) vorgesehen sind, die vorzugsweise mit den Kanälen (7, 9) verbunden sind.

21. Behälter nach Anspruch 19 oder 20, **dadurch gekennzeichnet,** daß der Behälter (1) mit den Kanälen (5, 7, 9), Seitenwänden (3) sowie gegebenfalls mit den Rohrabschnitten (4) und Versteifunsrippen (10) einstückig ausgebildet ist.
